# EUROPEAN PATENT APPLICATION

(11) **EP 4 678 478 A1**
(43) Date of publication of application: **14.01.2026**
(21) Application number: 24187899.0
(22) Date of filing: 11.07.2024
(51) Int. Cl.: B60R 13/04, B60Q 1/26, B60Q 3/10, B60R 13/02

(54) **TRIM COMPONENT OF OR FOR A VEHICLE AND VEHICLE COMPRISING SUCH A TRIM COMPONENT**

(71) Applicant: HELLA Saturnus Slovenija d.o.o., 1000 Ljubljana (SI)
(72) Inventor: Smuc, Matevz, 1000 Ljubljana (SI); Tekavcic, Andraz, 4000 Kranj (SI); Wagner, Andrej, 1000 Ljubljana (SI)
(74) Representative: Behr-Wenning, Gregor

(57) **Abstract**

The present invention relates to a trim component (101, 102, 103, 104, 105, 106) of or for a vehicle (11), comprising a base body (12) having a first surface (18) and a second surface (20), the second surface (20) being the visible side of the trim component (101, 102, 103, 104, 105, 106) when mounted to the vehicle (11), one or more receptacles (22) arranged on the second surface (20) and either formed by the base body (12) or fastened to the base body (12), and at least one insert (24) removably fastened to the receptacle (22) and/or the base body (12). Moreover, the present invention is directed to a vehicle (11) which comprises such a trim component 101, 102, 103, 104, 105, 106).

## Description

The present invention relates to a trim component of or for a vehicle. Moreover, the present invention is directed to a vehicle comprising such a trim component.

### PRIOR ART

Individualization of devices is a common trend. As an example, the display setup of mobile phones can be selected according to personal preferences.

While the setup of the electronical input devices of vehicles may also be selected according to the personal preferences, the possibilities to individualize the outer appearance of vehicles, however, are rather limited once the vehicle has been ordered. One may exchange the vehicle seats or the bumpers or add a spoiler, however, such changes are associated with a high expenditure.

It is one object of one embodiment of the present invention to present a trim component of or for a vehicle by which the drawbacks described above can at least be minimized. In particular, it is one task to propose a trim component that can be individualized in an easy and modifiable manner. Furthermore, an embodiment of the present invention has the object to provide a vehicle that can be equipped with such a trim component.

The object is solved by the features specified in claims 1 and 14. Advantageous embodiments are the subject of the dependent claims.

One aspect of the present invention is directed to a trim component of or for a vehicle, comprising
- a base body having a first surface and a second surface, the second surface being the visible side of the trim component when mounted to the vehicle,
- one or more receptacles
   ∘ arranged on the second surface and
   ∘ either formed by the base body or fastened to the base body, and
- at least one insert removably fastened to the receptacle and/or the base body.

Trim components within the present disclosure are preferably external trim components like bumpers, grilles, pillars and the like. However, the trim components may also be embodied as internal trim components like liners or dashboards.

The inserts can be inserted into the receptacles similar to a plug and the respective socket. For this purpose the insert may be at least partially be formed complementarily to the receptacle.

The insert may as an example have the same color as the remaining trim component such that no individualization is obtained. This may be the default setting when the vehicle is delivered. Inserts of different colors and design may be ordered as accessories of the vehicle or bought later.

The insert can be removably fastened to the trim component such that it can be easily exchanged for another insert of a different design. The exchange can be done by the owner or user itself, however, there may also be embodiments in which the exchange can only be done in a service station. In both cases the exchange is quickly done so that a spontaneous exchange is possible, depending on the occasion the vehicle is used for or on the mood of the driver or owner of the respective vehicle.

According to another embodiment a plurality of receptacles of uniform cross-sectional shape is arranged on the second surface. The trim component may be equipped with only one receptacle or with a plurality of receptacles. In the latter case, one may replace some of the inserts and arrange them in a certain pattern. One may of cause also replace all the inserts. The possibilities of an individual arrangement of the inserts increases with the number of receptacles. As al the receptacles have the same cross-sectional shape, one particular insert can be plugged into any of the receptacles, thereby increasing the number of possible arrangements.

In a further embodiment the receptacles are arranged in a matrix shape. An arrangement in a matrix shape enables a regular and homogeneous arrangement of the inserts. Moreover, a high number of receptacles can be placed in a small area.

In another embodiment the number of receptacles per area unit is either constant and/or changing within the second surface. The number of receptacles per area unit can also be considered as a "receptacle density". When the number is constant, a homogenous appearance can be obtained. When the number of receptacles per area unit is changing, particular optical effects may be preset. When areas of a high number of receptacles are arranged adjacent to areas of a lower number of receptacles, a certain wave-like optical effect can be reached. Moreover, some areas of the trim component can be more emphasized than others.

A further embodiment the insert is protruding the second surface when fastened to the receptacle. In this case the insert may have two sections of different cross-sectional shapes. One section is complementary to the receptacle, the cross-sectional shape of the other section that is protruding the second surface can be freely chosen. The degree of freedom can be further increased.

According to another embodiment the insert comprises fastening means for the removable fastening of the insert to the receptacle and/or the base body. The insert may be fastened to the trim component by frictional engagement. However, in operation of the vehicle and with an increasing operational time, the frictional engagement may degrade. In contrast to that the fastening means may be designed particularly according to the operational requirements so the insert may be reliably fastened to the trim component. Moreover, it may be desirable that a tool is needed to remove the insert from the trim component. The fastening means can be designed for an interaction with a given tool. The tool may work similar to a key or include a key so that only authorized persons can remove the insert.

In a further embodiment the fastening means comprise latching elements. In this embodiment, the insert only has to be moved into the receptacle. The latching elements, sometimes also referred to as snap-fits, are activated by this movement only. No further tools or steps are needed for fastening. The fastening of the inserts is thus very easy. However, the fastening means are not limited to latching elements. The fastening means may also include screw, bayonet fixations or magnets, to name a few.

In another embodiment a sealing element is arranged in the receptacle and/or on the insert for sealing the insert against the base body. In particular, when the trim component is an external trim component, the sealing elements prevent the accumulation of water inside the receptacles which may lead to fouling. The sealing elements can prevent the accumulation of water inside the receptacles.

A further embodiment a décor layer is applied to the insert. The décor layer may have a metallic appearance or provide other optical effects. A high degree of individualization can be reached.

According to another embodiment the insert is illuminated or illuminable and comprises light permeable sections. In this embodiment, an individualization can be reached at night or in the twilight. Moreover, particular effects can be reached e.g. by using different brightness or flashes.

In a further embodiment
- the light source is connectable to electrical wires by a plug connection or by a contact connection and/or
- the insert is connectable to the light guide by a plug connection or by a contact connection.

Both plug connections or contact connections facilitate the exchange of the inserts equipped with a light source. A plug connection may have to be manually established. In case of a contact connection, the insert only has to be moved into the receptacle. The contact connection is established by the respective positioning of the insert relative to the receptacle. The contact connection is thus established very easily and quickly.

According to another embodiment the light source comprises an electronical component. In case the light source comprises light emitting diodes, they are arranged on a printed circuit board which can carry one or more electronical components which can be connected to a control unit of the vehicle. The electronical component may comprise a storing unit in which information on the light source regarding brightness, color and the like is stored and can be used by the control unit for example under which conditions the light source may be turned on or off. The control unit can activate and deactivate the light sources e.g., to generate a certain scene that may be chosen by the owner of the vehicle.

In another embodiment the insert comprises coupling sections for coupling with a tool. As mentioned, there may be embodiments in which the owner or user of the vehicle may remove the inserts herself or himself. This may, however, enable other persons to do the same and thereby harm the owner or user of the vehicle. In this embodiment the insert is designed such that it can only be removed with a particular tool. The coupling sections can interact with the tool similar to a key and a lock. The owner or user of the vehicle can take control of the exchange of the insert. Unauthorized removal or exchange can be avoided or at least becomes more difficult.

In another embodiment, the trim component comprises a removable cover body that encloses at least a part of the second surface. The cover body is preferably at least partially transparent or translucent such that the inserts are conceivable from outside, in particular, when the trim component is an external trim component. The cover body provides protection to the inserts and prevents them from inadvertent loosening from the receptacles.

Another aspect of the invention is directed towards a vehicle, comprising a trim component according to one of the preceding embodiments.

The technical effects and advantages as discussed regarding the present trim component to a large extent equally apply to the vehicle. Briefly, the insert can be removably fastened to the trim component such that it can be easily exchanged for another insert of a different design. The exchange can be done by the owner or user itself, however, there may also be embodiments in which the exchange can only be done in a service station. In both cases, however, the exchange is quickly done so that a spontaneous exchange is possible, depending on the occasion the vehicle is used for or on the mood of the driver or owner of the respective vehicle. A high degree of individualization can be obtained in an easy and quick way.

According to another embodiment the vehicle comprises a control unit that is communicatively connectable or connected with the insert. In case the insert is illuminated or illuminable, the respective light source can be activated by the control unit. To this end, the light source can provide particular information on its properties to the control unit such that the control unit can provide appropriate commands to the light source. One information may be if the color and/or the brightness of the light provided by the light source can be changed. The control unit can activate and deactivate the light sources e.g., to generate a certain scene that may be chosen by the owner of the vehicle.

### PREFERRED EMBODIMENTS OF THE INVENTION

The present invention is described in detail with reference to the drawings attached wherein
- Figure 1A: shows a first embodiment of a trim component according to the invention by a principle front view,
- Figure 1B: shows a sectional view of the trim component along the sectional plane defined in Figure 1A,
- Figure 1C: shows a sectional view of a second embodiment of the trim component along the sectional plane defined in Figure 1A,
- Figure 2: is a principle sectional view through a third embodiment of the trim component,
- Figure 3: is a principle sectional view through a fourth embodiment of the trim component,
- Figure 4: is a principle sectional view through a fifth embodiment of the trim component,
- Figure 5: is a principle sectional view through a fifth embodiment of the trim component, and
- Figure 6: is a principle top view on a vehicle comprising a trim component according to one of the embodiments presented.

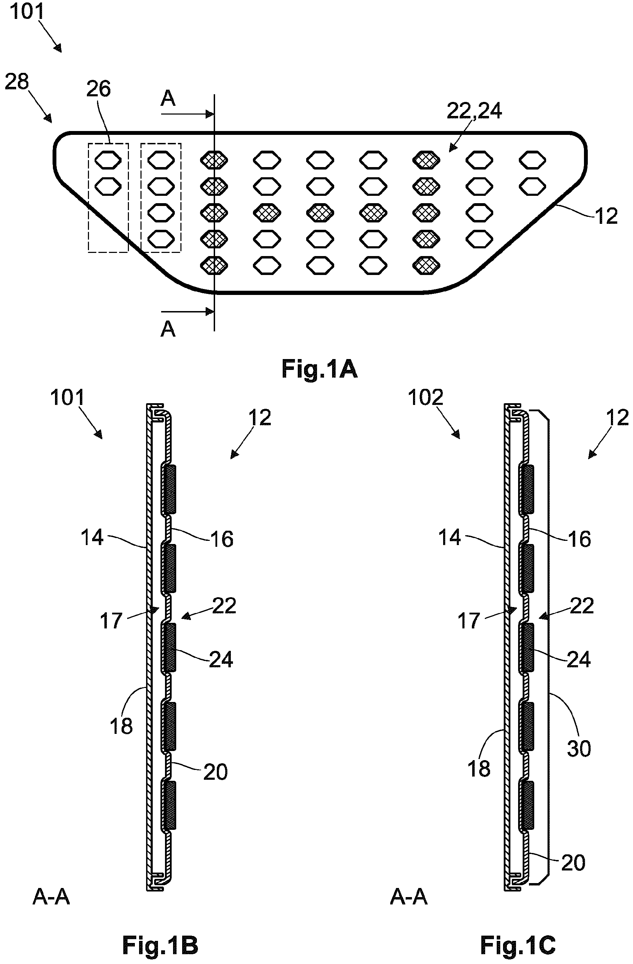

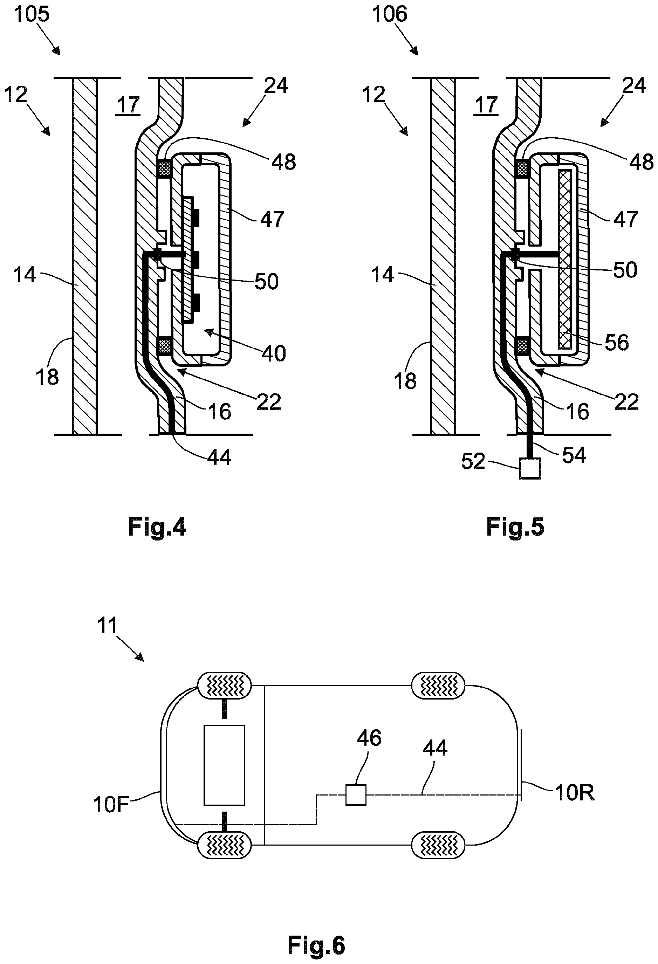

Figure 1A shows a principle front view of a trim component 101 according to the present invention that may be embodied as an external trim component 101 such as a grille or a bumper of a vehicle 11 (see Figure 6). Figure 1B is a sectional view of the trim component 101 along the sectional plane A-A defined in Figure 1 A. The trim component 101 is composed of a base body 12 which is formed by a first sub-unit 14 and a second sub-unit 16 which are connected to each other, thereby forming a void 17. The base body 12 forms a first surface 18 and a second surface 20. When mounted to the vehicle 11, the first surface 18 faces to the interior and the second surface 20 to the exterior. The second surface 20 is the visible side of the trim component 101 conceivable to a spectator who is in the vicinity of the vehicle 11. The trim component 101 comprises a plurality of receptacles 22 into each of which an insert 24 can be introduced and fastened to the base body 12. The inserts 24 can be made by injection molding or similar manufacturing methods. As shown in Figure 1A, the inserts 24 may be of the same color as the second surface 20 or having a different color. The inserts 24 having a different color are indicated in Figure 1A with a cross-hatch. The inserts 24 having a different color are arranged according to the preferences of the owner or driver of the vehicle 11. In the shown embodiment, the inserts 24 of different color are arranged as to form a pattern similar to the letter "H".

The receptacles 22 have a uniform cross-sectional shape, here a hexagonal shape, and are arranged in a matrix-shape, i.e., in columns and rows. In Figure 1A an area unit 26 is defined. The number of receptacles 22 per area unit 26 varies and decreases towards the side edges 28 of the trim component 101.

The inserts 24 may be releasably fastened to the base body 12 by a frictional engagement and/or by magnets or by other suitable means. The receptacles 22 are directly accessible such that the inserts 24 can be inserted into and removed from the receptacles 22 fairly easily.

Figure 1C is a cross-sectional view through a second embodiment of the trim component 102 in analogy to Figure 1B. The front view according to Figure 1A may be the same for the first embodiment of the trim component 101 and the second embodiment of the trim component 102. The main difference is that a transparent or translucent cover body 30 is fastened to the base body 12 and is enclosing the second surface 20 and the inserts 24 inserted into the receptacles 22. The cover body 30 protects the second surface 20 and the inserts 24 from external influences such as temperature, moisture, stone chipping and chemicals. However, the cover body 30 prevents the direct access to the inserts 24. To exchange the inserts 24, the cover body 30 needs to be replaced first which may be done at a service station.

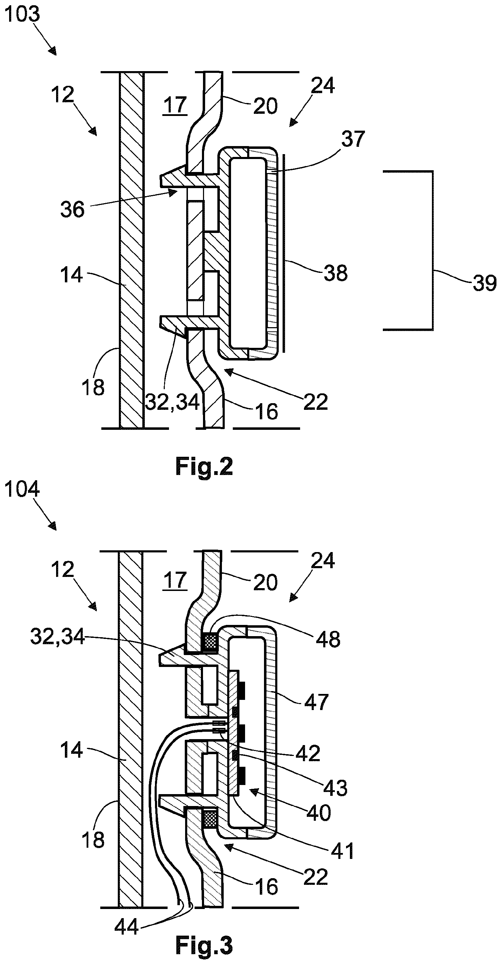

Figure 2 is a principle sectional view through a third embodiment of the trim component 103. The insert 24 is provided with fastening means 32 that are embodied as latching elements 34. For fastening the latching elements 34 by which the insert 24 can be fastened to the base body 12. For this purpose, the second sub-unit 16 of the base body 12 is provided with through-openings 36 into which the latching elements 34 can be introduced. The latching elements 34 are elastically deformable and reach behind the second sub-unit 16 of the base body 12 when the insert 24 is fastened to the base body 12.

A décor layer 38 is applied to the insert 24. The décor layer 38 can be of any color and may represent a certain graphical element. The décor layer 38 may be printed on the insert 24 using color, ink or the like. The insert 24 may also be a "molded-in-color-part". The décor layer 38 may also be designed to create a metallic effect and may be applied by chemical or physical vapor deposition.

The insert 24 protrudes the second surface 20 of the base body 12 when introduced into the receptacle 22. The part of the insert 24 protruding the second surface 20 can be provided with a cross-sectional shape that is independent from the shape of the receptacle 22. The shape of the protruding portion of the insert 24 is visible to a spectator. It is possible not only to change the color or surface appearance of the insert 24 but also its visible outer shape. The visible cross-sectional shape of the insert 24 may be circular, star-shaped or polygonal, to name a few.

The insert is equipped with various coupling sections 37 by which the insert 24 can be connected to a tool 39. The insert 24 can be fastened to the receptacle 22 such that it can only be removed using the tool 39. The tool 39 and the coupling sections 37 can interact with each other similar to a key and a lock, thereby preventing unauthorized removal.

Figure 3 is a principle sectional view through a fourth embodiment of the trim component 104. A light source 40 is integrated into the insert 24. In the fourth embodiment, the light source 40 comprises an RGB-LED that is mounted on a printed circuit board 41 on which certain electronical components 43 like a storage are mounted. Next to red, green and blue, colors inside the gamut of the RGB-LED can be generated by mixing. A plug connection 42 is provided by which the light source 40 can be connected to wires 44 for the power supply of the light source 40. The plug connection 42 is typically manually established by inserting one or more plugs into respective sockets before the insert 24 is introduced into the receptacle 22. Further, the light source 40 can be communicatively connected with a control unit 46 of the vehicle 11 (see Figure 4) by means of the wires 44. The control unit 46 and the light source 40 can exchange information in particular on the properties of the light source 40, e.g., if the color and/or brightness of the light provided by the light source 40 can be changed. This information is stored on the electronical component 43. Moreover, the control unit 46 may get an information on the position of the receptacle 22 into which the respective light source 40 has been inserted. The control unit 46 may switch on and off the light sources 40 of a plurality of inserts 24 in a certain sequence and a certain color such that a welcome scene or farewell scene can be displayed.

To enable the light to exit the insert 24, the insert is provided with a light permeable section 47. The insert 24 can be composed of a transparent or translucent material and/or provided with a plurality of small holes that are filled with a transparent or translucent filling material.

A sealing element 48 is arranged between the insert 24 and the second surface 20 of the base body 12 to prevent the intrusion of water into the insert 24. Damages in particular of the light source 40 and the plug connection 42 are prevented.

Figure 4 is a principle sectional view through a fifth embodiment of the trim component 105. The design of the trim component 105 according to the fifth embodiment is largely similar to the one of the fourth embodiment. However, the wires 44 for the power supply and the communication with the control unit 46 are integrated into the second sub-unit 16 of the base body 12. Alternatively, the wires 44 may be embodied as a conductive path printed on the second sub-unit 16.

When the insert 24 is fastened to the base body 12, a contact connection 50 is established. There is no need to insert 24 plugs into sockets.

Figure 5 shows a sixth embodiment of the trim component 106. In the sixth embodiment of the trim component 106, a remotely arranged the light source 52 is connected to a light guide 54 into which the light emitted by the remotely arranged the light source 52 is introduced. The light is then transmitted to the insert 24 and projected to a diffusive layer 56 which homogeneously distributes the light within the insert 24 before exiting the same. Also in this case, the insert 24 is connected with the light guide 54 by a contact connection 50.

Figure 6 is a principle top view on a vehicle 11 that is provided for example with a front trim component 10F and a rear trim component 10R according to the fourth or fifth embodiment. The front trim part 10F can be a grille while the rear trim part 10R can be a bumper. The insert 24 is connected by wires 44 with the already mentioned control unit 46. The inserts 24 of the front trim component 101 and the rear trim component 101 can be illuminated independently from each other by the control unit 46.

### REFERENCE LIST

- 101 - 106: trim component
- 10F: front trim component
- 10R: rear trim component
- 11: vehicle
- 12: base body
- 14: first sub-unit
- 16: second sub-unit
- 17: void
- 18: first surface
- 20: second surface
- 22: receptacle
- 24: insert
- 25: coupling section
- 26: area unit
- 28: side edge
- 30: cover body
- 32: fastening means
- 34: latching element
- 36: through-opening
- 37: coupling section
- 38: décor layer
- 39: tool
- 40: light source
- 41: printed circuit board
- 42: plug connection
- 43: electronical component
- 44: wires
- 46: control unit
- 47: light permeable section
- 48: sealing element
- 50: contact connection
- 52: remotely arranged the light source
- 54: light guide
- 56: diffusive layer

## Claims

1. Trim component (101, 102, 103, 104, 105, 106) of or for a vehicle (11), comprising
- a base body (12) having a first surface (18) and a second surface (20), the second surface (20) being the visible side of the trim component (101, 102, 103, 104, 105, 106) when mounted to the vehicle (11),
- one or more receptacles (22)
∘ arranged on the second surface (20) and
∘ either formed by the base body (12) or fastened to the base body (12), and
- at least one insert (24) removably fastened to the receptacle (22) and/or the base body (12).

2. Trim component (101, 102, 103, 104, 105, 106) according to claim 1,
**characterized in that** a plurality of receptacles (22) of uniform cross-sectional shape is arranged on the second surface (20).

3. Trim component (101, 102, 103, 104, 105, 106) according to claim 2, **characterized in that** the receptacles (22) are arranged in a matrix shape.

4. Trim component (101, 102, 103, 104, 105, 106) according to one of the preceding claims,
**characterized in that** the number of receptacles (22) per area unit (26) is
- either constant and/or
- changing
within the second surface (20).

5. Trim component (101, 102, 103, 104, 105, 106) according to one of the preceding claims,
**characterized in that** the insert (24) is protruding the second surface (20) when fastened to the receptacle (22).

6. Trim component (101, 102, 103, 104, 105, 106) according to one of the preceding claims,
**characterized in that** the insert (24) comprises fastening means (32) for the removable fastening of the insert (24) to the receptacle (22) and/or the base body (12).

7. Trim component (101, 102, 103, 104, 105, 106) according to claim 6,
**characterized in that** the fastening means (32) comprise latching elements (34).

8. Trim component (101, 102, 103, 104, 105, 106) according to one of the preceding claims,
**characterized in that** a sealing element (48) is arranged in the receptacle (22) and/or on the insert (24) for sealing the insert (24) against the base body (12).

9. Trim component (101, 102, 103, 104, 105, 106) according to one of the preceding claims,
**characterized in that** a décor layer (38) is applied to the insert (24).

10. Trim component (101, 102, 103, 104, 105, 106) according to one of the preceding claims,
**characterized in that** the insert (24)
- is illuminated or illuminable and
- comprises light permeable sections (47).

11. Trim component (101, 102, 103, 104, 105, 106) according to claim 10,
**characterized in that**
- at least one light source (40) is arranged inside the insert (24) and/or
- at least one light guide (54) is provided for guiding light generated by a remotely arranged light source (52) into the insert (24).

12. Trim component (101, 102, 103, 104, 105, 106) according to claim 11,
**characterized in that**
- the light source (40) is connectable to electrical wires (44) by a plug connection or by a contact connection and/or
- the insert (24) is connectable to the light guide (54) by a plug connection (42) or by a contact connection (50).

13. Trim component (101, 102, 103, 104, 105, 106) according to one of the preceding claims,
**characterized in that** the trim component (101, 102, 103, 104, 105, 106) comprises a removable cover body (30) that encloses at least a part of the second surface (20).

14. Vehicle (11), comprising a trim component (101, 102, 103, 104, 105, 106) according to one of the preceding claims.

15. Vehicle (11) according to claim 14,
comprising a control unit (46) that is communicatively connectable or connected with the insert (24).
